# EUROPÄISCHE PATENTSCHRIFT

(11) **EP 1 211 108 B1**
(45) Veröffentlichungstag und Bekanntmachung des Hinweises auf die Patenterteilung: **18.02.2004**
(21) Anmeldenummer: 01127109.5
(22) Anmeldetag: 15.11.2001
(51) Int. Cl.: B60G 15/08, F16F 9/05

(54) **Luftfederbein**
Air spring strut
Jambe de ressort pneumatique

(30) Priorität: 30.11.2000 DE 10059447
(43) Veröffentlichungstag der Anmeldung: 05.06.2002
(73) Patentinhaber: Continental Aktiengesellschaft, 30165 Hannover (DE)
(72) Erfinder: Oldenettel, Holger, 30900 Wedemark (DE); Berling, Ansgar, 30926 Seelze (DE)

(56) Entgegenhaltungen:
- EP-A- 0 259 245
- EP-A- 0 552 458
- DE-A- 2 100 338
- DE-A- 19 642 024
- DE-A- 19 908 607
- DE-C- 19 508 980
- US-A- 2 980 441
- US-A- 5 971 118

## Beschreibung

Die Erfindung betrifft ein Luftfederbein zur Anordnung zwischen einer Fahrzeugachse und einem Fahrzeugaufbau, das einen Stoßdämpfer und eine Luftfeder enthält und folgende Merkmale aufweist:
- der Stoßdämpfer enthält einen Zylinder und einen an einer Kolbenstange befestigten in den Zylinder einschiebbaren Kolben, wobei der Fußpunkt des Zylinders gelenkig an einem radführenden Bauteil und das obere Ende der Kolbenstange schwenkbar an einem Deckel der Luftfeder befestigbar ist
- die Luftfeder enthält einen Balg, der unter Ausbildung einer Abrollfalte zwischen einem Deckel und einem Abrollkolben eingespannt ist, wobei der Deckel an dem Fahrzeugaufbau eines Kraftfahrzeuges befestigbar ist und der Abrollkolben sich auf dem Zylinder des Stoßdämpfers abstützt
- die Außenwand des Balges der Luftfeder wird zumindest bereichsweise von einer Glocke umfasst.

Luftfederbeine mit einem Stoßdämpfer und einer Luftfeder werden in Kraftfahrzeuge eingebaut und dienen der Federung einer Fahrzeugachse gegenüber dem Fahrzeugaufbau und der Dämfpung der in den Fahrzeugaufbau eingeleiteten Schwingungen. Bei einer Einfederung eines Fahrzeugrades gegenüber dem Fahrzeugaufbau kommt es zu einer Schwenkbewegung des Luftfederbeines. Durch diese Schwenkbewegung des Luftfederbeines kann die Luftfeder derart verformt werden, dass von ihr Querkräfte auf das Luftfederbein ausgeübt werden. Diese Querkräfte müssen von dem Stoßdämpfer aufgenommen werden und können zu einer erhöhten Reibung zwischen der Kolbenstange bzw. dem Kolben und dem Zylinder des Stoßdämpfers führen. Infolge der erhöhten Reibung kann es zu einem frühzeitigen Verschleiß der Dichtungen des Stoßdämpfers kommen, die die Kolbenstange gegenüber dem Zylinder des Stoßdämpfers abdichten. Es sind bereits Vorschläge gemacht worden, wie die Querkräfte in der Luftfeder bei einer Schwenkbewegung des Luftfederbeins abgebaut werden können.

So ist aus der DE 195 08 980 C1 ein Luftfederbein der eingangs genannten Art bekannt, bei der der Abrollkolben der Luftfeder taumelbeweglich auf dem Zylinder des Stoßdämpfers angeordnet ist. Die taumelbewegliche Anordnung des Abrollkolbens ermöglicht bei einer Schwenkbewegung des Luftfederbeins eine Schwenkbewegung des Abrollkolbens relativ zum Zylinder des Stoßdämpfers. Diese Schwenkbewegung führt dazu, dass der von einer Glocke umfasste Balg der Luftfeder in jedem Einfederungszustand des Luftfederbeins eine nahezu rotationssymmetrische Abrollfalte ausbildet. Aufgrund dessen werden die in der Luftfeder auftretenden Querkräfte und die in den Stoßdämpfer durch die Luftfeder eingeleiteten Querkräfte reduziert.

Bei dem aus der DE 195 08 980 C1 bekannten Luftfederbein kann es jedoch bei einer großen Schwenkbewegung des Abrollkolbens der Luftfeder relativ zum Zylinder des Stoßdämpfers zu einer Berührung zwischen dem Abrollkolben und dem Teil des Balges der Luftfeder kommen, der sich an der Glocke der Luftfeder abstützt. Die Berührung kann zu einer Beschädigung des Balges der Luftfeder führen. Dies ist insbesondere dann der Fall, wenn der Abrollkolben tief in die Luftfeder eintaucht. Ein weiterer Nachteil des aus der genannten Druckschrift bekannten Luftfederbeins ist darin zu sehen, dass der Abrollkolben der Luftfeder weit bis an das untere Ende des Zylinders des Stoßdämpfers reichen muss, damit Schwenkbewegungen zwischen dem Abrollkolben und dem Zylinder ohne zu großen Winkelversatz des Abrollkolbens möglich werden (ein großer Winkelversatz zwischen dem Abrollkolben und dem Zylinder wäre ungünstig, da sich dabei eine Kollision zwischen dem Abrollkolben und Zylinder oder zwischen dem Abrollkolben und der Glocke ergeben könnte). Dies kann im unteren Bereich des Luftfederbeines zu Bauraumproblemen führen, insbesondere dann, wenn in diesem Bereich weitere Bauteile, z. B. Sensoren etc., vorgesehen werden sollen.

Der Erfindung liegt die Aufgabe zugrunde, ein Luftfederbein zu schaffen, bei dem bei einer Schwenkbewegung des unteren Endes des Luftfederbeines möglichst geringe Querkräfte in den Stoßdämpfer des Federbeines eingeleitet werden und bei dem einer Beschädigung des Balges der Luftfeder möglichst weitgehend vorgebeugt ist.

Gemäß den kennzeichnenden Merkmalen des Anspruchs 1 wird diese Aufgabe dadurch gelöst, dass
- die Glocke in jeder Querschnittsebene eine annähernd kreisrunde Querschnittsfläche hat und dass
- die Mittelpunkte der Querschnittsflächen auf einer Kurve angeordnet sind, die zumindest über den größten Teil des Federweges der Luftfeder annähernd einen Kreisbahnabschnitt darstellt.

Wenn die Fahrzeugachse eines Kraftfahrzeuges gegenüber dem Fahrzeugaufbau des Kraftfahrzeuges ein- bzw. ausgefedert wird, beschreibt der Fußpunkt des zwischen der Fahrzeugachse und dem Fahrzeugaufbau angeordneten Luftfederbeines und der Abrollkolben der Luftfeder des Luftfederbeines einen Kreisbahnabschnitt. Die Kurve, auf der die Mittelpunkte der Querschnittsflächen der Glocke angeordnet sind, wird vorzugsweise so gewählt, dass sie in etwa dem Kreisbahnabschnitt entspricht, den der Abrollkolben der Luftfeder bei einer Ein- bzw. Ausfederung der Fahrzeugachse gegenüber dem Fahrzeugaufbau beschreibt.

Der Vorteil der Erfindung ist insbesondere darin zu sehen, dass die Abrollfalte der Luftfeder in jedem Einfederungszustand der Luftfeder in etwa einen rotationssymmetrischen Querschnitt aufweist, so dass kleine Biegeradien des Balges im Bereich der Abrollfalte, die zu einer Beschädigung des Balges führen könnten, weitestgehend vermieden werden. Darüber hinaus sind die innerhalb der Luftfeder aufgebauten Querkräfte gering. Ein weiterer Vorteil der Erfindung ist darin zu sehen, dass es aufgrund der erfindungsgemäßen Ausbildung der Glocke, die den Balg der Luftfeder umfasst, bei einer Ein- bzw. Ausfederung der Luftfeder zu einer Schrägstellung der Abrollfalte der Luftfeder kommt. Aufgrund dieser Schrägstellung verläuft die von der Luftfeder ausgeübte Federkraft in etwa entlang der Längsachse des Stoßdämpfers des Luftfederbeins, so dass durch die von der Luftfeder ausgeübte Federkraft keine Querkräfte in das Luftfederbein eingeleitet werden. Ein weiterer Vorteil der Erfindung ist darin zu sehen, dass bei dem erfindungsgemäßen Luftfederbein nicht die Gefahr besteht, dass der Abrollkolben der Luftfeder denjenigen Teil des Balges berührt, der sich an der Glocke der Luftfeder abstützt, da der Verlauf der Glocke der Bewegungsbahn des Abrollkolbens entspricht. Ein weiterer Vorteil der Erfindung ist darin zu sehen, dass auf eine taumelbewegliche Anordnung des Abrollkolbens der Luftfeder auf dem Zylinder des Stoßdämpfers und dem damit verbundenen elastischen Lager verzichtet werden kann, wodurch sich die Kosten des Luftfederbeines reduzieren. Ein weiterer Vorteil der Erfindung ist schließlich darin zu sehen, dass der Abrollkolben der Luftfeder am oberen Ende des Zylinders des Stoßdämpfers befestigt werden kann, so dass im Bereich des unteren Endes des Zylinders des Stoßdämpfers ausreichend Bauraum für andere Bauteile zur Verfügung steht.

Gemäß einer Weiterbildung der Erfindung nach Anspruch 2 werden die Durchmesser der annähernd kreisförmigen Querschnittsflächen zum Fußpunkt des Luftfederbeins hin größer. Der Vorteil dieser Weiterbildung wird verständlich, wenn man Folgendes berücksichtigt: Die dem Balg der Luftfeder umfassende Glocke kann auf besonders einfache Art und Weise mit Hilfe eines formgebenden Kerns hergestellt werden (z. B. in einem Gießverfahren), der nach Fertigstellung der Glocke aus dieser herausgezogen werden muss. Der Vorteil der Weiterbildung ist darin zu sehen, dass der Kern einfach aus der Glocke entfernt werden kann, wenn sich diese zu einem Ende hin "aufweitet", was durch die Weiterbildung erreicht wird.

Gemäß einer Weiterbildung der Erfindung nach Anspruch 3 ist der Abrollkolben der Luftfeder gekrümmt, wobei die mittlere Krümmungslinie auf der Kurve liegt, auf dem auch die Mittelpunkte der Querschnittsflächen der Glocke liegen. Der Vorteil dieser Weiterbildung ist darin zu sehen, dass der Abrollkolben und die Glocke optimal aneinander angepasst sind und somit eine weitgehend rotationssymmetrische Ausbildung der Abrollfalte des Balges in jedem Einfederungszustand der Luftfeder gewährleistet ist.

Gemäß einer Weiterbildung der Erfindung nach Anspruch 4 ist der Abrollkolben der Luftfeder gegenüber der Längsachse des Stoßdämpfers schräg gestellt. Der Vorteil dieser Weiterbildung wird verständlich, wenn man Folgendes berücksichtigt: Der Kreisbahnabschnitt, auf dem die Mittelpunkte der Querschnittsflächen der Glocke liegen, weist einen großen Krümmungsradius auf und kann bereichsweise in erster Näherung gut durch eine Gerade angenähert werden. Der Abrollkolben kann gegenüber der Längsachse des Stoßdämpfers derart schräg gestellt werden, dass seine Mittelachse entlang dieser Geraden verläuft. Der Vorteil der Weiterbildung ist also darin zu sehen, dass durch eine Schrägstellung des Abrollkolbens eine einfache aber dennoch ausreichende Anpassung des Abrollkolbens an den Kreisbahnabschnitt, auf dem die Mittelpunkte der Querschnittsflächen der Glocke liegen, möglich ist.

Ein Ausführungsbeispiel und weitere Vorteile der Erfindung werden im Zusammenhang mit den nachstehenden Figuren erläutert, darin zeigt:
- Fig. 1: ein Rad, das mittels eines Luftfederbeines gegenüber einem Fahrzeugaufbau eines Kraftfahrzeuges federnd gelagert ist,
- Fig. 2: ein Luftfederbein,
- Fig. 3: ein Luftfederbein,
- Fig. 4: ein Luftfederbein,
- Fig. 5: ein Luftfederbein.

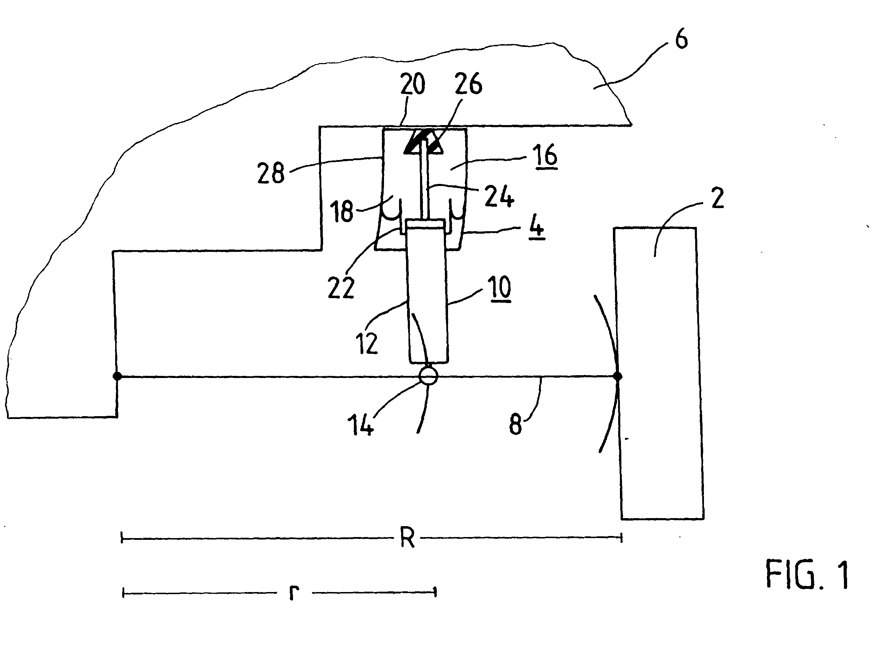

Figur 1 zeigt in schematischer Darstellung ein Rad 2 eines Kraftfahrzeuges, das mittels eines Luftfederbeines 4 gegenüber einem Fahrzeugaufbau 6 eines Kraftfahrzeuges federnd gelagert ist. Das Rad 2 ist an einem radführenden Bauteil in Form einer Achse 8 drehbar gelagert. Das Luftfederbein 4 enthält einen rotationssymmetrischen Stoßdämpfer 10 mit einem Zylinder 12, dessen Fußpunkt 14 gelenkig mit der Achse 8 verbunden ist. Die gelenkige Verbindung zwischen dem Fußpunkt 14 mit der Achse 8 kann beispielsweise mittels eines Elastomerbauteiles bzw. mittels eines Kugelgelenkes, durch das die Achse 8 geführt wird, erfolgen. Darüber hinaus enthält das Luftfederbein 4 eine Luftfeder 16 mit einem Balg 18, der unter Ausbildung einer Abrollfalte zwischen einem Deckel 20 und einem Abrollkolben 22 der Luftfeder eingespannt ist und von einer Glocke 28 umfasst wird. Der Deckel 20 der Luftfeder 16 ist an dem Fahrzeugaufbau 6 des Kraftfahrzeuges befestigt und der Abrollkolben 22 der Luftfeder 16 stützt sich auf den Zylinder 12 des Stoßdämpfers 10 ab. In dem Zylinder 12 des Stoßdämpfers 10 befindet sich ein (nicht gezeigter) in den Zylinder einschiebbarer Kolben, der an einer Kolbenstange 24 befestigt ist, die in Richtung des Fahrzeugaufbaus 6 aus dem Zylinder 12 herausragt. Das obere Ende der Kolbenstange 24 ist über ein Elastomerlager 26 mit dem Deckel 20 der Luftfeder 16 verbunden.

Wenn das Rad 2 gegenüber dem Fahrzeugaufbau 6 des Kraftfahrzeuges ein- bzw. ausfedert, beschreibt es dabei einen Kreisbahnabschnitt, wobei die Kreisbahn in etwa den Radius R aufweist. Die hierbei von dem Rad ausgeübten Querkräfte werden über die Achse 8 direkt in den Fahrzeugaufbau 6 eingeleitet und müssen von dem Punkt, in dem die Achse 8 an dem Fahrzeugaufbau 8 befestigt ist, aufgenommen werden. (Eine Einleitung dieser Querkraft in das Luftfederbein 4 findet hingegen nicht statt, da das Luftfederbein 4 aufgrund der gelenkigen Anbindung des Fußpunktes 4 an die Achse 8 den Querkräften ausweichen kann. Im Gegensatz dazu ist ein McPherson-Luftfederbein in seinem Fußpunkt fest an dem radführenden Bauteil befestigt, so dass es auch die von dem Rad 2 ausgeübten Querkräfte aufnehmen können muss). Der Fußpunkt 14 des Zylinders 12 bzw. des Stoßdämpfers 10 beschreibt dabei ebenfalls einen Kreisbahnabschnitt, wobei die Kreisbahn in etwa einen Radius r aufweist. Durch die Bewegung des Fußpunktes 14 auf dem Kreisbahnabschnitt mit dem Radius r wird die Kolbenstange 24 des Stoßdämpfers 10 in dem Elastomerlager 26 verschwenkt. Darüber hinaus bewegt sich der Abrollkolben 22 der Luftfeder 16 ebenfalls auf einem Kreisbahnabschnitt, wenn das Rad 2 gegenüber dem Fahrzeugaufbau 6 des Kraftfahrzeuges ein- bzw. ausgefedert wird.

Die Glocke 28, die den Balg 18 der Luftfeder 16 umfasst, weist in jeder Querschnittsebene, (d. h. in der Ebene, deren Flächennormale der Mittelachse des Stoßdämpfers 10 entspricht) eine annähernd kreisrunde Querschnittsfläche auf. Darüber hinaus stellt sich die Abrollfalte der Luftfeder in jedem Einfederungszustand annähernd so ein, dass die Luftfederkraft entlang der Längsachse des Stoßdämpfers 10 und somit auf den Fußpunkt 14 des Luftfederbeins wirkt und von diesem aufgenommen wird. Durch die Luftfederkraft werden also auch keine Querkräfte in die Luftfeder eingeleitet. Dadurch ist sichergestellt, dass die Abrollfalte des Balges 18 der Luftfeder 16 in jedem Einfederungszustand des Luftfederbeines annähernd rotationssymmetrisch ausgebildet ist, so dass in der Luftfeder 16 keine Querkräfte aufgebaut werden. Die Mittelpunkte der Querschnittsflächen liegen in etwa auf dem Kreisbahnabschnitt, der durch den Abrollkolben 22 bei einer Ein- bzw. Ausfederung des Luftfederbeines 4 beschrieben wird.

Bei der in der Figur 1 gezeigten Glocke 28 weisen die annähernd kreisrunden Querschnittslfächen alle annähernd den gleichen Radius auf, so dass es zu der gekrümmten Form der Glocke 28 kommt.

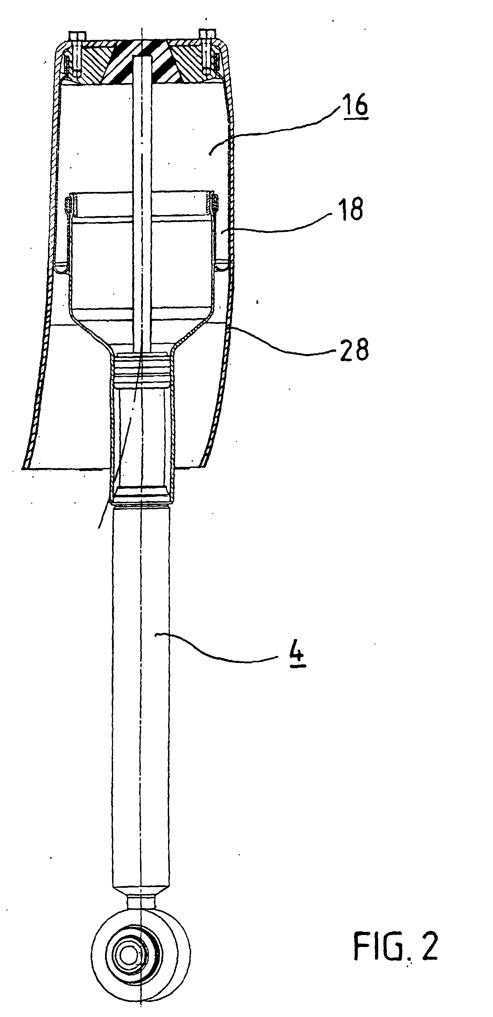

Figur 2 zeigt das in der Figur 1 schematisch dargestellte Luftfederbein 4 im Detail. Die Glocke 28, die den Balg 18 der Luftfeder 16 umfasst, weist in jeder Querschnittsebene eine annähernd kreisrunde Querschnittsfläche auf, wobei die Mittelpunkte der Querschnittsflächen auf einer Kurve angeordnet sind, die annähernd einen Kreisbahnabschnitt darstellt (in der Figur 1 strichliniert eingezeichnet). Die Radien der in etwa kreisrunden Querschnittsflächen sind alle in etwa gleich groß, so dass die Glocke 28 entsprechend dem Kreisbahnabschnitt, auf dem die Mittelpunkte der Querschnittsflächen liegen, gekrümmt ist.

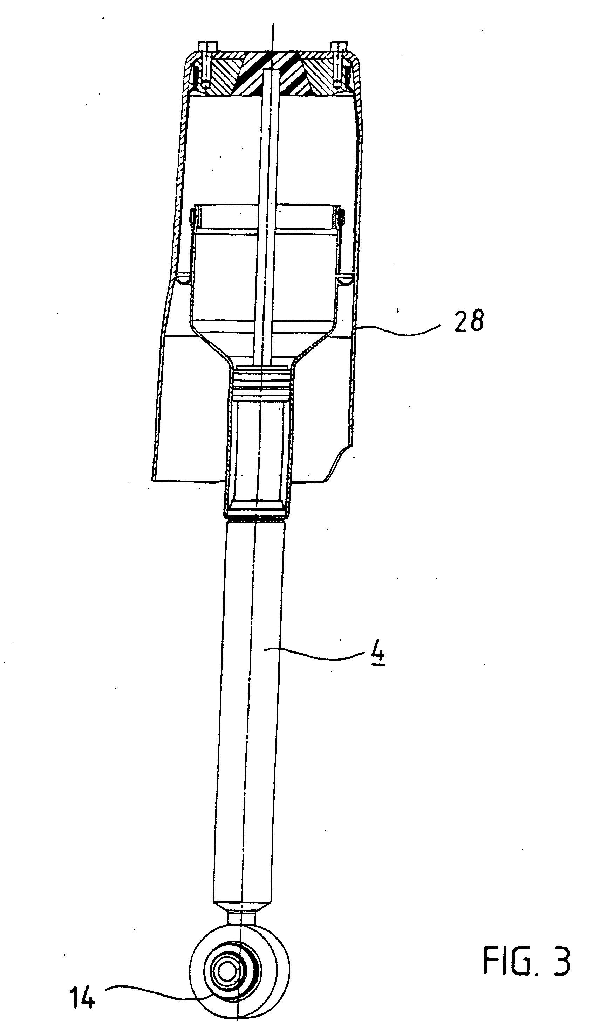

Figur 3 zeigt ein weiteres Ausführungsbeispiel des Luftfederbeines 4, das sich von dem in der Figur 2 gezeigten Ausführungsbeispiel dadurch unterscheidet, dass die Radien der annähernd kreisrunden Querschnittsflächen der Glocke 28 zum Fußpunkt 14 des Luftfederbeines 4 hin größer werden.

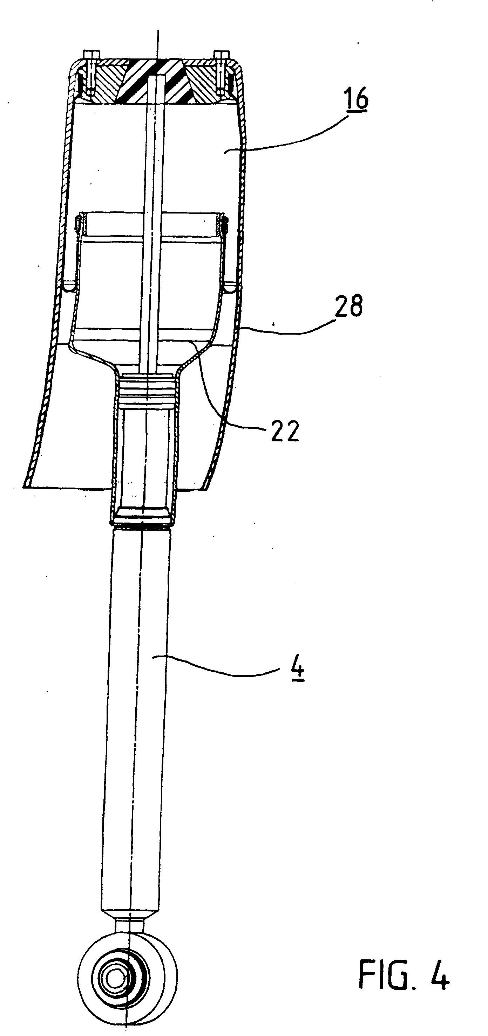

Figur 4 zeigt ein weiteres Ausführungsbeispiel des Luftfederbeines 4, das weitestgehend mit dem Ausführungsbeispiel gemäß Figur 2 übereinstimmt. Der einzige Unterschied ist darin zu sehen, dass bei dem in der Figur 4 gezeigten Ausführungsbeispiel der Abrollkolben 22 der Luftfeder 16 gekrümmt ist, wobei die mittlere Krümmungslinie einem Kreisbahnabschnitt entspricht, der in etwa dem Kreisbahnabschnitt entspricht, der in etwa mit dem Kreisbahnabschnitt zusammenfällt, auf dem die Mittelpunkte der kreisrunden Querschnittsflächen der Glocke 28 liegen. Das in der Figur 4 gezeigte Luftfederbein 4 kann auch mit einer Glocke gemäß dem Ausführungsbeispiel nach Figur 3 versehen werden.

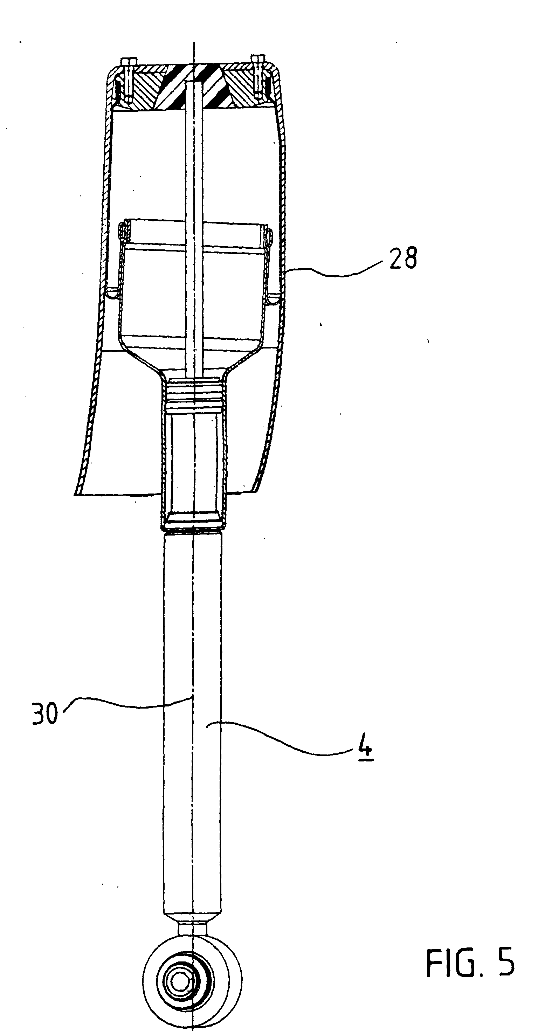

Figur 5 zeigt ein Ausführungsbeispiel eines Luftfederbeines 4, das ebenfalls weitestgehend dem in der Figur 2 gezeigten Luftfederbein entspricht. Der einzige Unterschied ist darin zu sehen, dass der Abrollkolben 22 gegenüber der Längsachse 30 des Stoßdämpfers 10 schräg gestellt ist. Die Schrägstellung des Luftfederbeines erfolgt derart, dass die Mittelachse des Abrollkolbens möglichst nahe an dem Kreisbahnabschnitt verläuft, auf dem die Mittelpunkte der Querschnittsflächen der Glocke 28 liegen. Auch bei dem in der Figur 5 gezeigten Ausführungsbeispiel des Luftfederbeines 4 kann die gekrümmte Glocke 28 durch die in der Figur 3 gezeigten Glocke ersetzt werden.

### Bezugszeichenliste

### (ist Teil der Beschreibung)

- 2: Rad
- 4: Luftfederbein
- 6: Fahrzeugaufbau
- 8: Achse
- 10: Stoßdämpfer
- 12: Zylinder
- 14: Fußpunkt
- 16: Luftfeder
- 18: Balg
- 20: Deckel
- 22: Abrollkolben
- 24: Kolbenstange
- 26: Elastomerlager
- 28: Glocke
- 30: Mittelachse

## Patentansprüche

1. Luftfederbein (4) zur Anordnung zwischen einer Fahrzeugachse (8) und einem Fahrzeugaufbau (6), das einen Stoßdämpfer (10) und eine Luftfeder (16) enthält und folgende Merkmale aufweist:
- der Stoßdämpfer (10) enthält einen Zylinder (12) und einen an einer Kolbenstange befestigten in den Zylinder (12) einschiebbaren Kolben, wobei der Fußpunkt (14) des Zylinders (12) gelenkig an einem radführenden Bauteil (8) und das obere Ende der Kolbenstange (24) schwenkbar an einem Deckel (20) der Luftfeder (16) befestigbar ist
- die Luftfeder (16) enthält einen Balg (18), der unter Ausbildung einer Abrollfalte zwischen einem Deckel (20) und einem Abrollkolben (22) eingespannt ist, wobei der Deckel (20) an dem Fahrzeugaufbau (6) eines Kraftfahrzeuges befestigbar ist und der Abrollkolben (22) sich auf dem Zylinder (12) des Stoßdämpfers (10) abstützt
- die Außenwand des Balges (18) der Luftfeder (16) wird zumindest bereichsweise von einer Glocke (28) umfasst.
**dadurch gekennzeichnet, dass**
- die Glocke (28) in jeder Querschnittebene eine annähernd kreisrunden Querschnittfläche hat und dass
- die Mittelpunkte der Querschnittflächen auf einer Kurve angeordnet sind, die zumindest über den größten Teil des Federweges der Luftfeder (16) annähernd einen Kreisbahnabschnitt darstellt.

2. Luftfederbein (4) nach Anspruch 1, **dadurch gekennzeichnet, dass** die Durchmesser der annähernd kreisförmigen Querschnittflächen zum Fußpunkt (14) unteren Ende des Luftfederbeins (4) hin größer werden.

3. Luftfederbein (4) nach einem der Ansprüche 1 bis 2, **dadurch gekennzeichnet, dass** der Abrollkolben (22) der Luftfeder (16) gekrümmt ist, wobei die mittlere Krümmungslinie auf der Kurve liegt, auf dem auch die Mittelpunkte der Querschnittsflächen der Glocke (28) liegen.

4. Luftfederbein (4) nach einem der Ansprüche 1 bis 2, **dadurch gekennzeichnet, dass** der Abrollkolben (22) der Luftfeder (16) gegenüber der Längsachse des Stoßdämpfers (10) schräg gestellt ist.

## Claims

1. Air spring strut (4) for disposition between a vehicle axle (8) and a vehicle body (6), which strut includes a shock absorber (10) and an air spring (16) and has the following features:
- the shock absorber (10) includes a cylinder (12) and a piston which is mounted on a piston rod and is slidable into the cylinder (12), the bottom point (14) of the cylinder (12) being mountable in an articulated manner on a wheel-controlling component (8), and the upper end of the piston rod (24) being pivotably mountable on a cover (20) of the air spring (16);
- the air spring (16) includes a bellows (18) which is clamped in position between a cover (20) and a roll-off piston (22) so as to form a roll-off fold, the cover (20) being mountable on the body (6) of an automotive vehicle, and the roll-off piston (22) being supported on the cylinder (12) of the shock absorber (10); and
- the external wall of the bellows (18) of the air spring (16) is surrounded by a bell (28), at least in various regions,
**characterised in that**
- the bell (28) has an approximately circular cross-sectional . area in each cross-sectional plane; and **in that**
- the centres of the cross-sectional areas are disposed on a curve which approximately represents a portion of a circular path, at least over the greatest part of the,deflection of the air spring (16).

2. Air spring strut (4) according to claim 1, **characterised in that** the diameters of the approximately circular cross-sectional areas become greater towards the bottom point (14) at the lower end of the air spring strut (4).

3. Air spring strut (4) according to one of claims 1 to 2, **characterised in that** the roll-off piston (22) of the air spring (16) is curved, the central line of curvature lying on the curve on which the centres of the cross-sectional areas of the bell (28) also lie.

4. Air spring strut (4) according to one of claims 1 to 2, **characterised in that** the roll-off piston (22) of the air spring (16) is inclined relative to the longitudinal axis of the shock absorber (10).

## Revendications

1. Jambe à ressort pneumatique (4) prévue pour être placée entre un essieu de véhicule (8) et une structure de véhicule (6), laquelle jambe à ressort pneumatique comprend un amortisseur (10) et un ressort pneumatique (16) et présente les caractéristiques suivantes :
- l'amortisseur (10) comprend un cylindre (12) et un piston monté de façon télescopique dans le cylindre (12) et fixé sur une tige de piston, où le point de base (14) du cylindre (12) peut être fixé de façon articulée sur un élément (8) guidant la roue, et l'extrémité supérieure de la tige de piston (24) peut être fixée de façon pivotante sur un couvercle (20) du ressort pneumatique (16),
- le ressort pneumatique (16) comprend un soufflet (18) qui, en formant un pli roulant, est encastré entre un couvercle (20) et un piston à soufflet roulant (22), où le couvercle (20) peut être fixé sur la structure (6) d'un véhicule automobile, et le piston à soufflet roulant (22) est en appui sur le cylindre (12) de l'amortisseur (10),
- la paroi extérieure du soufflet (18) du ressort pneumatique (16) est entourée, au moins par zones, d'une cloche (28),
**caractérisée**
- **en ce que** la cloche (28), dans chaque plan en coupe transversale, a une surface de section presque circulaire, et
- **en ce que** les points milieux des surfaces de section sont disposés sur une courbe qui représente, au moins sur la plus grande partie de la course de débattement élastique du ressort pneumatique (16), presque un segment de trajectoire circulaire.

2. Jambe à ressort pneumatique (4) selon la revendication 1, **caractérisée en ce que** les diamètres des surfaces de section de forme presque circulaire sont supérieurs en allant vers l'extrémité inférieure de la jambe à ressort pneumatique (4), jusqu'au point de base (14).

3. Jambe à ressort pneumatique (4) selon l'une des revendications 1 ou 2, **caractérisée en ce que** le piston à soufflet roulant (22) du ressort pneumatique (16) est incurvé, la ligne de courbure centrale se trouvant sur la courbe sur laquelle se trouvent également les points milieux des surfaces de section de la cloche (28).

4. Jambe à ressort pneumatique (4) selon l'une des revendications 1 ou 2, **caractérisée en ce que** le piston à soufflet roulant (22) du ressort pneumatique (16) est positionné en oblique par rapport à l'axe longitudinal de l'amortisseur (10).
